# EUROPÄISCHE PATENTANMELDUNG

(11) **EP 4 667 863 A1**
(43) Veröffentlichungstag der Anmeldung: **24.12.2025**
(21) Anmeldenummer: 25183046.9
(22) Anmeldetag: 16.06.2025
(51) Int. Cl.: F41G 7/00, F41G 3/02, F41G 3/16

(54) **ZIELPUNKTBESTIMMUNG IN ABHÄNGIGKEIT EINES DIGITALEN ZWILLINGS EINES ZIELOBJEKTS**

(30) Priorität: 21.06.2024 DE 102024117591
(71) Anmelder: Rheinmetall Electronics GmbH, 28309 Bremen (DE)
(72) Erfinder: KRETZ, Vincent, 25746 Wesseln (DE); STIENSMEIER, Jonas, 28217 Bremen (DE)
(74) Vertreter: HKW Intellectual Property PartG mbB

(57) **Zusammenfassung**

Verfahren (M) zum Erzeugen eines Zielpunkts (ZP) auf einem Zielobjekt (102), mit den Schritten: a) Bereitstellen (S18) eines Sensorsignals, welches eine Wiedergabe des Zielobjekts (102) enthält; b) Bereitstellen (S26) eines digitalen Zwillings des Zielobjekts (102) in Abhängigkeit des Sensorsignals; und c) Bereitstellen (S40) eines Zielpunkts (ZP) für ein Wirkmittel (116) in Abhängigkeit des digitalen Zwillings.

## Beschreibung

Die vorliegende Erfindung betrifft ein Verfahren zum Erzeugen eines Zielpunkts auf einem Zielobjekt, ein Computerprogrammprodukt und eine Vorrichtung zum Erzeugen eines Zielpunkts auf einem Zielobjekt.

Dokument EP 3 706 078 A1 offenbart ein Verfahren zum Erfassen einer Zielangabe einer ersten Plattform zu einem Ziel, Erfassen eines Orts und einer Ausrichtung einer zweiten Plattform, Übertragen der Zielangabe von einem Koordinatensystem der ersten Plattform in ein Koordinatensystem der zweiten Plattform und Senden der Zielangabe in dem Koordinatensystem der zweiten Plattform an die zweite Plattform. Dabei erfasst die erste Plattform die zweite Plattform in einem Bild, leitet aus dem Bild ein 3D-Modell der zweiten Plattform ab, und vergleicht das abgeleitete 3D-Modell mit einem hinterlegten 3D-Modell der zweiten Plattform mittels eines SLAM-Algorithmus. Dieser Vergleich ermöglicht es, einen Abstand der beiden Plattformen und eine Ausrichtung der zweiten Plattform relativ zu dem Koordinatensystem der ersten Plattform abzuleiten.

Dokument DE 10 2018 117 743 A1 offenbart eine Vorrichtung zum Betreiben einer Waffenstation mit zumindest einer Waffe, welche auf ein Zielobjekt richtbar gelagert ist, mit: einer Kamera zur Aufnahme eines Zielbereichs der Waffe und eines Bilds des Zielobjekts innerhalb des Zielbereichs, einem Anzeigesystem zur optischen Darstellung einer Waffensicht umfassend den aufgenommenen Zielbereich der Waffe und das aufgenommene Bild des Zielobjekts innerhalb des Zielbereichs, einem Speicher zum Speichern einer Mehrzahl von Verwundungsmodellen für verschiedene Zielobjekt-Typen von Zielobjekten, eine Ermittlungs-Einheit zum Ermitteln eines Zielobjekt-Typs des Zielobjekts innerhalb des Zielbereichs mittels des aufgenommenen Bilds des Zielobjekts, einer Auswahl-Einheit zum Auswählen eines der gespeicherten Verwundungsmodelle in Abhängigkeit von dem ermittelten Zielobjekt-Typ, und einer Überlagerungs-Einheit, welche dazu eingerichtet ist, das aufgenommene Bild des Zielobjekts in der Waffensicht mit dem ausgewählten Verwundungsmodell zur Bereitstellung einer Augmented-Reality-Darstellung der Waffensicht zu überlagen. Das Verwundungsmodell ist zielobjekttypspezifisch und zeigt die Schwachstellen oder Zielzonen des jeweils zugeordneten Zielobjekt-Typs an.

Auf dem Gefechtsfeld ist die Zeit bis zur Abgabe eines Schusses auf ein Zielobjekt entscheidend. Aufgrund technischer Fortschritte steht dabei immer weniger Zeit zur Verfügung, um vor einem Gegner einen Schuss abzugeben.

Vor diesem Hintergrund besteht eine Aufgabe der vorliegenden Erfindung darin, eine benötigte Zeit bis zum Abgeben eines Schusses auf ein Zielobjekt zu verkürzen.

Demgemäß wird ein Verfahren zum Erzeugen eines Zielpunkts auf einem Zielobjekt vorgeschlagen. Das vorgeschlagene Verfahren hat zumindest die folgenden Schritte a) bis c): In einem Schritt a) wird ein Sensorsignal bereitgestellt. Das bereitgestellte Sensorsignal enthält eine Wiedergabe des Zielobjekt. In einem Schritt b) wird in Abhängigkeit des Sensorsignals ein digitaler Zwilling des Zielobjekts bereitgestellt. In einem Schritt c) wird in Abhängigkeit des digitalen Zwillings ein Zielpunkt für ein Wirkmittel bereitgestellt.

Der Zielpunkt kann beispielsweise einem Leitsystem des Wirkmittels, beispielsweise einem Feuerleitsystem einer Waffe, übermittelt und/oder eingegeben werden, und zwar vorzugsweise automatisch. Beispielsweise kann das Verfahren oder ein nachgeschaltetes bzw. durch das Wirkmittelleitsystem ausgeführtes Wirkleitverfahren eine Freigabe eines Wirkens des Wirkmittels (insb. Freigabe eines Schusses) durch einen Benutzer vor einem Auslösen der Wirkung (insb. vor einer Schussabgabe) fordern bzw. vorsehen. In diesem Fall wird das Wirkmittel also maschinell auf den Zielpunkt auf dem Zielobjekt ausgerichtet. Der Zielpunkt kann beispielsweise einem Benutzer des Wirkmittels angezeigt werden. In beiden Fällen wird dem Benutzer des Wirkmittels gedankliches Verarbeiten eines überlagerten Wirkbarkeitsmodells (insb. Verwundungsmodells) abgenommen, sodass das Wirkmittel schnellstmöglich auf den Zielpunkt wirken (insb. gefeuert werden) kann.

Man kann sagen, dass das vorgeschlagene Verfahren eine manuelle Anvisierung eines Objekts unnötig macht. Stattdessen kann das Verfahren bzw. die das Verfahren ausführende Vorrichtung nach bestimmten Regeln / Kriterien automatisch einen Zielpunkt (fachsprachlich: best spot) auf dem Zielobjekt anvisieren. Es gibt auch die Option, dass ein Benutzer - beispielsweise über eine Bedienoberfläche wie einen berührungsempfindlichen Bildschirm - einen oder mehrere Zielpunkte auf dem Zielobjekt vorgeschlagen bekommt und durch Auswählen oder Bestätigen dieses oder eines dieser vorgeschlagenen Zielpunkte eine Schussabgabe auf diesen Zielpunkt auslöst. Beispielsweise indem eine Vorauswahl von Zielpunkten für verschiedene Zielobjekte voreingestellt wird, kann eine Benutzerinteraktion innerhalb eines Anvisierungsprozesses vollständig ausgeklammert werden.

Unter einem Zielpunkt kann man einen Punkt bzw. Ort an einer Oberfläche eines Zielobjekts verstehen, welcher Punkt durch eine Wirkung des Wirkmittels, beispielsweise eine Waffenwirkung, zu treffen ist. Man kann den Zielpunkt als einen zu treffenden Treffpunkt beschreiben, beispielsweise einen durch einen Schuss tatsächlich zu treffenden Punkt beschreiben. Man kann den Zielpunkt als einen Zwischenschritt zum Ermitteln eines Haltepunkts beschreiben, wobei der Haltepunkt den Punkt bezeichnet, auf den ein Wirkmittel zu richten ist, um mit dem Wirkmittel auf den Zielpunkt zu wirken. Der Haltepunkt kann beispielweise durch Berücksichtigen einer Bewegung des Zielobjekts (bspw. fahrendes Zielobjekt), einer Bewegung des Wirkmittels (beispielsweise bei einem Schuss aus der Fahrt), ballistischer Eigenschaften des Wirkmittels (bspw. Geschossflugbahn), einer Wetterbedingung (bspw. Luftdichte, Wind, etc.), einer Abweichung des Wirkmittels und/oder einer Zielentfernung auf Grundlage des Zielpunkts bestimmen.

Unter einem Zielobjekt kann man ein Fahrzeug, insbesondere ein Luftfahrzeug, ein Landfahrzeug, und/oder ein Wasserfahrzeug verstehen. Unter einem Luftfahrzeug kann man insbesondere ein Drehflüglerfahrzeug verstehen. Unter einem Landfahrzeug kann man insbesondere ein Radfahrzeug oder ein Kettenfahrzeug verstehen. Unter einem Wasserfahrzeug kann man insbesondere ein Überwasserfahrzeug verstehen. Unter einem Fahrzeug kann man insbesondere ein mehrgliedriges Fahrzeug verstehen, welches mehrere zueinander bewegliche Glieder hat, wie beispielswiese eine Wanne, einen zu der Wanne drehbaren Turm, ein zu dem Turm auf- und abkippbares Rohr und gegebenenfalls eine zu dem Turm dreh- und kippbare externe Waffenstation hat. Unter einem Zielobjekt kann man beispielsweise eine Waffenstation verstehen, wie eine lafettierte Waffe, die beispielsweise durch ein Fahrzeug getragen und/oder freistehend einsetzbar ist.

In Schritt a) wird zumindest ein Sensorsignal bereitgestellt, es können also mehrere Sensorsignale bereitgestellt werden. Unter einem Sensorsignal kann beispielsweise zumindest ein Ausgangssignal eines Sensors verstanden werden. Unter einem Sensorsignal kann man eine Wiedergabe einer Umgebung verstehen. Unter einem Sensorsignal kann man ein kombiniertes und/oder fusioniertes Sensorsignal verstehen. Ein kombiniertes Sensorsignal kann bedeuten, dass mehrere Umgebungswiedergaben gleichartiger Sensoren zusammen bereitgestellt werden, beispielsweise mehrerer Kameras zu einer Rundblickkamera. Ein fusioniertes Sensorsignal kann bedeuten, dass mehrere Umgebungswiedergaben nichtgleichartiger Sensoren zusammen bereitgestellt werden, beispielsweise eine Radaraufnahme und eine Kameraaufnahme eines selben Umgebungsabschnitts und/oder eine IR-Kameraaufnahme und eine UV-Kameraaufnahme eines selben Umgebungsabschnitts. Das Sensorsignal kann ein Rohsignal und/oder ein teilweise verarbeitetes Signal enthalten, wie beispielsweise ein komprimiertes Signal, ein geglättetes Signal, ein gefiltertes Signal und dergleichen.

Das Sensorsignal kann beispielsweise zumindest ein Bildsignal von einem Bildsensor, insbesondere im Infrarotbereich, ultravioletten Bereich und/oder sichtbaren Bereich, zumindest ein Radarsignal von einem Radarsensor, zumindest ein Akustiksignal von einem Akustiksensor, insbesondere im Niederfrequenzbereich und/oder im Ultraschallbereich, zumindest ein Lidarsignal von einem Lidarsensor und/oder zumindest ein für ein elektromagnetisches Strahlenbild indikatives Sensorsignal von einem sonstigen elektromagnetischen Sensor enthalten.

Das Bereitstellen des Sensorsignals kann beispielsweise enthalten: Empfangen des Umgebungssensorsignals von zumindest einem Sensor, welcher sich an einer eigenen Plattform, an einer anderen Plattform, wie einer waffentragenden Plattform oder einer Aufklärungsplattform, insbesondere in der Umgebung der eigenen Plattform, und/oder an einem Satelliten befindet. Eine eigene Plattform kann beispielsweise eine Vorrichtung zum Erzeugen eines Zielpunkts auf einem Zielobjekt und das Wirkmittel enthalten, sowie beispielsweise den zumindest einen Sensor, eine Empfangseinheit zum Empfangen von Sensorsignalen von zumindest einem von der eigenen Plattform entfernten Sensor, eine Vorrichtung zum Ermitteln eines Haltepunkts für das Wirkmittel in Abhängigkeit des Zielpunkts (dem Wirkmittel zugeordnete Wirkungsleiteinrichtung, insb. der Waffe zugeordnete Feuerleiteinrichtung), und/oder einen Antrieb zum Ausrichten des Wirkmittels auf den Zielpunkt und/oder Haltepunkt enthalten.

Unter einer Plattform kann man beispielsweise ein Fahrzeug, wie ein Landfahrzeug und/oder ein Luftfahrzeug, aber auch ein Wasserfahrzeug oder ein Raumfahrzeug verstehen. Weiters kann man unter der Plattform beispielsweise eine bemannte Plattform, welche zum Bedient-Werden durch einen Benutzer vor Ort eingerichtet ist, und/oder eine unbemannte Plattform, welche zum teil-/autonomen Betrieb und/oder zum Fernbedient-Werden durch einen entfernten Benutzer eingerichtet ist, wie beispielsweise eine Drohne, verstehen. Unter einem Landfahrzeug kann man beispielsweise ein Radfahrzeug und/oder ein Kettenfahrzeug verstehen. Unter einem Luftfahrzeug kann man beispielsweise einen Starrflügler oder einen Drehflügler verstehen, insbesondere eine autonome oder teilautonome Drohne.

Es kann sein, dass der digitale Zwilling des Zielobjekts beispielsweise auf der Basis des zumindest einen Sensorsignals ad hoc erstellt bzw. erzeugt und durch Datenbankwissen kontinuierlich verfeinert wird.

Es kann vorgesehen sein, dass beispielsweise elektromagnetische Signale erfasst werden, die wichtige Informationen zur Vermessung und Bewertung einzelner Strukturen und deren Funktionen zur Analyse einer unmittelbaren Umgebung der eigenen Plattform liefern bzw. enthalten. Diese Daten können beispielsweise in Echtzeit an eine zentrale Verarbeitungseinheit übermittelt werden. Dort können sie beispielsweise sowohl zu einer sofortigen Analyse und/oder einer Umwandlung in ein digitales Abbild als auch zur Speicherung in einer Datenbank weitergeleitet werden. Auf der Grundlage dieser Daten kann beispielsweise ein Basismodell des digitalen Zwillings des Zielobjekts (Fahrtzeugs) erstellt. Dieses Modell stellt beispielsweise einen aktuellen Zustand des Zielobjekts (Fahrzeugs), seine Umgebung und sein Verhalten dar. Das Modell kann beispielsweise dazu geeignet sein, als Grundlage für ein Wirken (insb. einen Angriff) auf die beste Stelle zu dienen.

Um die Genauigkeit und den Nutzen des digitalen Zwillings zu erhöhen, kann das Modell beispielsweise mit (umfangreichem) Wissen beispielsweise aus einer zentralen Datenbank angereichert werden. Diese Datenbank kann beispielsweise in der Vergangenheit gewonnene Daten (fachsprachlich: historische Daten) und/oder aggregiertes Wissen über ähnliche Typen Zielobjekt (Fahrzeugtypen) und/oder bekannte Fehlerbilder dieses Typs Zielobjekts oder ähnlicher Typen Zielobjekt enthalten. Beispielsweise kann durch ein Abgleichen des ad hoc erstellten Modells mit diesen Datenbankinformationen der digitale Zwilling verfeinert werden, was beispielsweise zu einer präziseren Diagnose und einer effizienteren Feuerleitung führen kann.

Im Vergleich zu einem digitalen Zwilling ist ein Konzept der virtuellen Realität (augmented virtual reality) bezüglich der Verfeinerung begrenzt. Man kann sagen, dass es bei einer virtuellen Realität lediglich darum geht, eine virtuelle Welt mit der Realität zu verknüpfen. Demgegenüber kann es sein, dass der digitale Zwilling vollständig auf einer virtuellen Widergabe (beispielsweise einer Simulation) basiert, welche Daten aus der realen Welt sammelt und sich selbst auf der Grundlage von Veränderungen anpasst.

Man kann sagen, dass der digitale Zwilling schadensrelevante Informationen zu dem Zielobjekt wiedergibt. Diese können zumindest eine der folgenden Informationen beinhalten: eine Information zu einer verwundbaren Stelle, wie einer Luke, einem (externen/internen) Kraftstofftank, einem Munitionsbunker, einem Gelenk, und dergleichen, eine Information zu einer Wirkungs-relevanten Stelle (Stelle, die für einen Einsatz eines Wirkmittels durch das Zielobjekt relevant ist), wie einem Sensor, einer Waffenstation, einem Munitionsvorrat und dergleichen, eine Information zu einer vorgeschädigten Stelle, wie eine bereits durch ein eigenes oder ein anderes Wirkmittel getroffene Stelle, und/oder eine Information zu einer exponierten Stelle, wie eine ungedeckte Luke, eine ungedeckte Waffenstation, einen ungedeckten Sensor, ein ungedecktes Kommunikationsmittel und dergleichen. Vorzugsweise gibt der digitale Zwilling schadensrelevante Informationen wieder, die in dem Sensorsignal erkennbar und/oder erschließbar sind.

Unter einer erschließbaren Information kann man verstehen, dass das Sensorsignal anzeigt, dass eine bekannte Luke oder Waffenstation nicht durch einen Baum oder ein Bauwerk gedeckt ist.

Es kann vorgesehen sein, dass der digitale Zwilling ein dreidimensionales Modell ist, das beispielsweise auf Grundlage öffentlich zugänglicher Daten (insb. Bilder) erstellt wird, um authentisch zu sein. Es kann beispielsweise sein, dass 8-10 Bilder eines Typs Zielobjekt zur Erstellung ausreichen. Dieses Modell kann beispielsweise manuell bzw. durch einen Anwender mit Zielpunkten vorab ergänzt worden sein, um "Vorzugstreffpunkte" bzw. vermutete Schwachpunkte (fachsprachlich: Weak Spots) zu hinterlegen. Man kann sagen, dass dies vorteilhaft ein nachträgliches manuelles Erweitern eines hinterlegten digitalen Zwillings ermöglicht. Ein solcher (generischer) digitaler Zwilling, der eine Silhouette eines Typs Zielobjekt wiedergibt, kann beispielsweise eine Zielpunktbestimmung robuste ermöglichen. Dies kann beispielsweise bedeuten, dass eine einfache Abdeckung eines Zielobjekts nicht ausreicht, um die Erkennung des Typs des Zielobjekts zu verhindern. Eine solche Ausbildung hat den Vorteil, dass sich mit zunehmender Einsatzdauer eine Datenlage verbessert.

Man kann sagen, dass es zur automatischen Anvisierung notwendig ist, bestimmte Punkte am gegnerischen Ziel ausfindig zu machen. Da vor allem bei Landfahrzeugen von einer starken Tarnung ausgegangen werden kann, die ggf. Bereiche verdeckt, kann es sein, dass es auf dem Gefechtsfeld nicht vollumfänglich möglich ist, die Bereiche einfach nur am gegnerischen Objekt, beispielsweise mit Objektdetektion durch künstliche Intelligenz zu erkennen. Stattdessen wird - mit anderen Worten - hier bzw. in Ausführungsformen vorgeschlagen, eine Datenbasis mit digitalen Zwillingen möglicher Typen von Zielobjekten vorzuhalten. Beispielsweise mittels einer klassischen und/oder einer Kl-basierte Objektdetektion kann der Typ des wiedergegebenen Zielobjekts bestimmt werden. Es kann sein, dass eine klassische und/oder Kl-basierte Posenschätzung (fachsprachlich: Pose Estimation) des Zielobjekts das Zielobjekt bzw. die Ausrichtung des Zielobjekts im realen Raum einordnet, indem beispielsweise markante Punkte oder Eckpunkte identifiziert werden, und der digitale Zwilling des entsprechenden Typs virtuell in die entsprechende Perspektive gedreht wird, unter welcher bzw. in welcher das Zielobjekt auch in der Realität sichtbar ist, und gegebenenfalls in eine virtuelle Überdeckung gebracht. Hierbei kommt vorzugsweise eine Perspektivenkorrektur zwischen einer Perspektive des zumindest einen Sensors und einer Perspektive bzw. Visierlinie des jeweiligen Wirkmittels zum Einsatz.

Es kann sein, dass innerhalb des digitalen Zwillings verschiedene Zielpunkte (Best Spots) für verschiedene Effektoren bzw. Waffen hinterlegt sind. Man kann sagen, dass ein virtueller Punkt zur Markierung des Zielpunkts vorzugsweise genutzt wird, um einen Haltepunkt zu bilden, der mit Hilfe einer Wirkmittelleitung in einen Vorhaltepunkt umgerechnet wird. Anstatt eines hinterlegten digitalen Zwillings kann beispielsweise auch eine hinterlegte Wertetabelle enthaltend 3D-Daten genutzt werden, um einen digitalen Zwilling zu erzeugen, um einen Zielpunkt zu definieren. Es gibt also verschiedene - auch kombinierbare - Möglichkeiten, um einen digitalen Zwilling bereitzustellen.

Ein weiterer Vorteil eines hinterlegten generischen digitalen Zwillings kann darin gesehen werden, dass eine Datenbasis einem Benutzer veranschaulicht werden kann, um dem Benutzer nach seiner Wahl die Möglichkeit zu geben, auf dem digitalen Zwilling einen weiteren Zielpunkt oder gar mehrere Zielpunkte beispielsweise für verschiedenen Perspektiven auf ein Zielobjekt hinzuzufügen, die sich im Laufe der Gefechte herauskristallisieren. Man kann auch sagen, dass ein Benutzer eine Datenbank erweitern oder aktualisieren kann.

Der Begriff des Wirkmittels soll vorzugsweise jedes technische System beinhalten, das auf einen Zielpunkt richtbar ist, um auf den Zielpunkt zu wirken. Das Wirkmittel kann vorzugsweise eine Waffe sein. Die Begriffe "Waffe" bzw. ein "Schuss" oder ein "Schießen" oder "Abfeuern" der Waffe sollen nicht auf eine Rohrwaffe beschränkt sein. Vielmehr wird die Waffe gewählt aus einer Liste enthaltend: eine Rohrwaffe, eine Raketenwaffe, eine Schallwaffe, eine Energiewaffe und Mischformen daraus (bspw. sog. Base-Bleed-Geschoss). Die eigene Plattform kann vorzugsweise mehrere unterschiedliche Wirkmittel und/oder Waffen tragen. Als Wirkmittel kommen beispielsweise auch Systeme zum Beeinflussen eines Gegners in Betracht, wie Laser zum Blenden eines optischen Systems, gerichtete Funkwellen zum Überlasten eins Schaltkreises und dergleichen.

Wenn in der folgenden Beschreibung ein Schritt Y "vor Schritt X" erfolgen soll, dann enthält dies sowohl die Möglichkeit, dass Y "unmittelbar vor Schritt X" erfolgt, wie auch die Möglichkeit, dass zwischen den Schritte X und Y ein weiterer Schritt oder mehrere andere Schritte erfolgen. Entsprechendes gilt für "nach Schritt X".

Es kann sein, dass der in Schritt b) bereitgestellte digitale Zwilling das Zielobjekt auf Grundlage von Informationen zu dem Zielobjekt individuell beschreibt, welche Informationen in dem zumindest einen Sensorsignal enthalten sind. Somit wird der Zielpunkt auf tatsächlich vorhandene Eigenschaften gerichtet. Unter einer tatsächlich vorhandenen Eigenschaft kann man verstehen, dass ein bestimmter Oberflächenteil des Zielobjekts des eigenen Wirksystems/der eigenen Waffe ungedeckt zugewandt ist. Unter einer tatsächlichen vorhandenen Eigenschaft kann man verstehen, dass das Zielobjekt eine bestimmte Baugruppe (Sensor, externe Waffenstation, externen Kraftstofftank, offene Luke, ...) tatsächlich aktuell aufweist. Unter "tatsächlich" kann man "in dem Sensorsignal wiedergegeben" und/oder "in dem Sensorsignal erkennbar" verstehen.

Es kann sein, dass das Verfahren zusätzlich die folgenden Schritte d) bis f) nach Schritt c) enthält. In einem Schritt d) wirkt das Wirkmittel auf den Zielpunkt, beispielsweise wird die Waffe auf den Zielpunkt geschossen. Beispielsweise wird ein für eine Freigabe des Wirkmittels (Schussfreigabe) indikatives Signal ausgegeben, beispielsweise an das Wirkmittel und/oder an eine Wirkmittelleiteinrichtung bzw. Feuerleiteinrichtung und/oder einen Richtantrieb des Wirkmittels. Beispielsweise wird ein für eine erfolgte Abgabe eines Schusses und/oder für eine Wirkmittelwirkung an dem Zielobjekt indikatives Signal erfasst, beispielsweise in Abhängigkeit des kontinuierlich und/oder wiederholt bereitgestellten Sensorsignals. In einem Schritt e) wird eine Wirkung des Wirkmittels (bspw. Waffenwirkung des Schusses) bewertet. Beispielsweise wird die Bewertung anhand eines Katalogs von Bewertungskriterien und des Sensorsignals erstellt/erzeugt. In einem Schritt f) wird zumindest der Schritt c) wiederholt, wobei der Zielpunkt in Abhängigkeit der Bewertung in Schritt e) beibehalten oder gewechselt wird. Beispielsweise wird in Schritt f) in Abhängigkeit der Bewertung in Schritt e) entschieden / eine Bestimmung darüber getroffen, den Zielpunkt beizubehalten oder zu wechseln. Falls beispielsweise die Wirkung des Wirkmittels auf den Zielpunkt kein genügendes Resultat gezeigt hat (bspw. der Schuss die Panzerung wahrscheinlich nicht durchschlagen hat), wird beispielsweise der Zielpunkt gewechselt. Falls beispielsweise die Wirkmittelwirkung auf den Zielpunkt ein teilweise genügendes Resultat gezeigt hat (bspw. der Schuss eine Sensoreinheit und/oder Waffenstation des Zielobjekts wahrscheinlich teilweise zerstört hat), wird beispielsweise der Zielpunkt gewechselt. Somit wird die Zeit bis zu einem erneuten Wirken des Wirkmittels verkürzt.

Es kann sein, dass vor Schritt b) eine Datenbank bereitgestellt wird, welche mehreren Typen von Zielobjekten jeweils einen oder mehrere Zielpunkte zuordnet; dass vor Schritt c) der Typ Zielobjekt in Abhängigkeit der Wiedergabe des Zielobjekts bestimmt wird; und dass in Schritt c) der Zielpunkt in Abhängigkeit des bestimmten Typs des Zielobjekts aus der Datenbank ausgelesen wird. Somit kann die Datenbank für eine Menge von zumindest zwei unterschiedlichen Typen von Zielobjekten jeweils zumindest einen im Voraus ermittelten Zielpunkt bereithalten, um eine Zielpunktbestimmung besonders schnell zu ermöglichen.

Außerdem kann man diese Option als eine Rückfallposition nach dem "safe fail" Prinzip auffassen, welche einen Standard-Zielpunkt bereithält, falls das Verfahren auf Grundlage des Sensorsignals nicht zu einem anderen Zielpunkt gelangt. Beispielsweise bei besonders stark getarnten Fahrzeugen kann es für das Verfahren schwierig bis unmöglich sein, eine vorgeschädigte Stelle zu erkennen und wegen der Vorschädigung als Zielpunkt auszuwählen. Beispielsweise auf große Entfernung kann für das Verfahren schwierig bis unmöglich sein, Details wie einen Sensor, eine Waffe oder sonstiges Wirkmittel und/oder eine Kommunikationseinrichtung des Zielobjekts zu erkennen und als Zielpunkt zu bestimmen. Beispielsweise bei besonders stark getarnten Fahrzeugen kann es für das Verfahren schwierig bis unmöglich sein, trotz eines erkannten Turmgeschützes eine Lage einer Schwachstelle an einer Wanne als einen Zielpunkt zu ermitteln. In diesen Fällen kann mittels der Datenbank eine Standard-Schwachstelle (vermutet und) als Zielpunkt auf dem Zielobjekt vorgegeben werden. Es kann beispielsweise sein, dass als eine Rückfallposition ein Zentrum eines Turms eines Zielobjekts oder ein Zentrum des Zielobjekts dem jeweiligen Typ Zielobjekt zugeordnet sind.

Ein Typ des Zielobjekts kann beispielsweise eine Familie des Zielobjekts (beispielsweise "Panzer Leopard 2"), ein Modell (beispielsweise "Panzer Leopard 2A6") oder sogar eine Modellvariante (beispielsweise "Panzer Leopard 2A6 M CAN") des Zielobjekts bedeuten. Ein Typ des Zielobjekts kann beispielsweise eine Einteilung in die Klassen bedeuten: Fahrzeug, Panzer, UGW (unbemanntes Fahrzeug, fachsprachlich: "unmanned ground vehicle"), Radpanzer, Motorrad und dergleichen.

Es kann sein, dass vor Schritt b) eine Datenbank bereitgestellt wird, wobei in Schritt b) der digitale Zwilling auf Grundlage der Wiedergabe des Zielobjekts in dem Sensorsignal und zumindest einer in der Datenbank enthaltenen Information bereitgestellt wird. Im Folgenden werden bevorzugte Konzepte hierfür vorgestellt. Die Datenbank hat den Vorteil, dass Informationen in der Datenbank nicht mehr erfasst werden müssen, sodass die benötigte Zeit bis zum Zielpunkt verkürzt wird.

Es kann sein, dass vor Schritt b) eine Datenbank bereitgestellt wird, welche mehreren Typen von Zielobjekten jeweils einen oder mehrere wirkungsspezifische - insbesondere verwundungsspezifische - Parameter zuordnet; vor Schritt c) der Typ Zielobjekt in Abhängigkeit der Wiedergabe des Zielobjekts bestimmt wird; vor Schritt c) ein oder mehrere wirkungsspezifische Parameter in Abhängigkeit des bestimmten Typs des Zielobjekts aus der Datenbank ausgelesen werden; und in Schritt c) der Zielpunkt in Abhängigkeit der ausgelesenen ein oder mehrere wirkungsspezifische Parameter der Zielpunkt erzeugt wird. Beispielsweise kann die Datenbank aggregierte Verwundungsdaten und/oder Expertenmodelle enthalten. Als Quelle für solche aggregierten Verwundungsdaten könnte beispielsweise eine Bilddatenbank über getroffene und zerstörte Fahrzeuge in Frage kommen. (Am 13.5.2024 ist unter https://www.oryxspioenkop.com/2022/02/attack-on-europe-documenting-equipment.html beispielsweise eine solche Bilddatenbank verfügbar.) Ein Expertenmodell eines Typs von Zielobjekt, kann beispielsweise durch menschliche Experten im Voraus anhand von beispielsweise einer Lage von Kühlöffnungen und/oder Abgasöffnungen und/oder Klappen erstellt eine vermutete Lage eines Motorraums eines Zielobjekts anzeigen. Bei dieser Option kann das Verfahren auf Grundlage einer breiten Datenbasis den (individuellen / individualisierten) digital Zwilling des Zielobjekts erzeugen.

Es kann sein, dass vor Schritt b) ein generischer digitaler Zwilling des Zielobjekts bereitgestellt wird; und dass in Schritt b) der generische digitale Zwilling in Abhängigkeit des Sensorsignals angepasst wird. Somit kann beispielsweise ein für das Zielobjekt individualisierter digitaler Zwilling aus bereits bekannten bzw. typspezifischen Eigenschaften und in dem Sensorsignal enthaltenen Informationen erzeugt werden. Weil bereits bekannte Informationen in dem generischen Zwilling enthalten sind, müssen diese nicht mehr erfasst werden, sodass ein sehr zeiteffizientes Verfahren vorgeschlagen wird. Unter dem Anpassen kann man verstehen, dass Unterschiede zwischen dem in dem Sensorsignal wiedergegebenen (realen) Zielobjekt und dem generischen digitalen Zwilling identifiziert und in den bereitgestellten (individuellen und/oder individualisierten) digitalen Zwilling übernommen werden. Beispielsweise auf diese Weise kann das vorgeschlagene Verfahren gewonnene Erkenntnisse nutzen, um den besten Zielpunkt zum Bekämpfen des Zielobjekts zu erzeugen.

Unter einem generischen digitalen Zwilling kann man verstehen: eine virtuelle Repräsentation, die generische Eigenschaften des jeweiligen Zielobjekt-Typs aufweist, wie beispielsweise Schwachstellen für einen oder mehrere Angriffe vorzugsweise aus unterschiedlichen Richtungen.

Es kann sein, dass das Bereitstellen eines generischen digitalen Zwillings des Zielobjekts enthält: Bereitstellen unterschiedlicher generischer digitaler Zwillinge; und Auswählens eines bereitgestellten generischen digitalen Zwillings auf Grundlage des zumindest einen Sensorsignals. Je mehr unterschiedliche generische digitale Zwillinge bereitgestellt werden, umso effizienter ist es, auf Grundlage des Sensorsignals den generischen digitalen Zwilling zum Anpassen automatisch auszuwählen.

Es kann sein, dass jeder der unterschiedlichen generischen digitalen Zwillinge mit zumindest einer Objektsignatur verknüpft ist, wobei ein generischer digitaler Zwilling ausgewählt wird, falls dessen Objektsignatur mit zumindest einem Teil des Sensorsignals übereinstimmt. Ein signaturbasiertes Auswählen ist eine etablierte und nachvollziehbare Technologie, die es ermöglicht, den passenden generischen digitalen Zwilling zuverlässig in kurzer Zeit auszuwählen.

Es kann sein, dass das Verfahren enthält: Bereitstellen eines trainierten Modells, welches vorzugsweise ein neuronales Netz und insbesondere ein faltendes neuronales Netz (fachsprachlich: convolutional neural network) ist/enthält; wobei der generische digitale Zwilling durch das trainierte Modell auf eine Eingabe zumindest eines Teils des Sensorsignals in das trainierte Modell hin ausgewählt und/oder ausgegeben wird. Diese KI-basierte Technologie zum Auswählen des passenden generischen digitalen Zwillings ermöglicht es beispielsweise, ungenau bekannte Typen Zielobjekt nach Wahrscheinlichkeiten zu bestimmen und somit wahrscheinlichkeitsbasiert en passenden generischen digitalen Zwilling auszuwählen. Man kann sagen, dass eine KI ein Erkennen einer getarnten Silhouette eines Zielobjekts vereinfacht. Es gibt beispielsweise die Möglichkeit, dass das trainierte Modell den generischen digitalen Zwilling ausgibt. Es gibt beispielsweise die bevorzugte Möglichkeit, dass das trainierte Modell den generischen digitalen Zwilling aus der Datenbank auswählt, wobei der generische digitale Zwilling in der Datenbank auch ohne das trainierte Modell zugreifbar hinterlegt ist. Das trainierte Modell kann beispielsweise in der Datenbank oder parallel zu der Datenbank in einem Speicher hinterlegt sein.

Im voranstehenden Text sind mehrere Datenbank-Aspekte vorgeschlagen, die je einzeln oder in einer Kombination (mehrerer möglicher Kombinationen) in dem vorgeschlagenen Verfahren umgesetzt sein können.

Beispielsweise um die jeweilige Datenbank so aktuell wie möglich zu halten, kann es sein, dass das Verfahren enthält: Hinzufügen der Wiedergabe des Zielobjekts und/oder der Bewertung der Wirkung des Wirkmittels auf das Zielobjekt und/oder des angepassten digitalen Zwillings zu der Zieldatenbank.

Man kann eine Anordnung des Zielobjekts im dreidimensionalen Raum relativ zu einer eigenen Plattform mit den sechs unabhängigen Freiheitsgraden beschreiben, wobei mehrgliedrige Zielobjekte entsprechend mehr Freiheitsgrade haben.

Die sechs Freiheitsgrade können in drei translationalen Freiheitsgraden eine Position und in drei rotatorischen Freiheitsgraden eine Ausrichtung beschreiben. Es kann sein, dass vor Schritt b) eine Position bzw. Relativposition des Zielobjekts auf Grundlage der Wiedergabe des Zielobjekts erkannt wird. Es kann sein, dass die Position nach Schritt b) erst durch einen Vergleich mit einem generischen digitalen Zwilling, wie beispielsweise durch einen Größenvergleich, bestimmt wird. Es kann sein, dass die Position erst zum Bestimmen eines Haltepunkts durch ein Feuerleitverfahren bestimmt wird.

Es kann sein, dass vor Schritt b) die Ausrichtung des Zielobjekts auf Grundlage der Wiedergabe des Zielobjekts erkannt wird; und dass in Schritt b) der digitale Zwilling auf Grundlage der Ausrichtung des Zielobjekts bereitgestellt wird. Die Ausrichtung des Zielobjekts kann man eine Pose des Zielobjekts nennen. Es kann hierbei eine Posenschätzung angewendet werden. Somit kann das Verfahren die Bestimmung / Bereitstellung des Zielpunkts in Schritt c) auf einen der eignen Plattform / des eigenen Wirkmittels (der eigenen Waffe) zugewandten Teil des Zielobjekts einschränken.

Es kann sein, dass der digitale Zwilling das Zielobjekt dreidimensional beschreibt. Eine dreidimensionale Beschreibung ist zwar aufwendiger zu berechnen als eine zwei- oder eindimensionale Beschreibung des Zielobjekts, aber sie ist auch sehr viel genauer. Somit kann der Zielpunkt auch mit hoher Genauigkeit auf Grundlage des dreidimensionalen digitalen Zwillings bestimmt werden.

Es kann sein, dass der Zielpunkt auf Grundlage zumindest eines der folgenden Schritte erkannt wird: Bestimmen (beispielsweise aus einer Infrarotinformation) zumindest eines Bereichs des Zielobjekts, der schwächer gepanzert ist als zumindest ein anderer Bereich des Zielobjekts; Bestimmen zumindest eines Bereichs des Zielobjekts, der sicherer treffbar ist als zumindest ein anderer Bereich des Zielobjekts (beispielsweise aus einer Größe des Bereichs, einem Relativwinkel bzw. Winkel des Bereichs und/oder einer Deckung des Bereichs); Bestimmen zumindest eines Bereichs des Zielobjekts, bei dem ein Treffer mit höherer Sicherheit mit einem Ausfall des Zielobjekts assoziiert ist als zumindest bei einem anderen Bereich des Zielobjekts (die Assoziierung ist beispielsweise in einer Klassifikation hinterlegt, wobei beispielsweise in dieser Reihenfolge ein Munitionsbunker vor Treibstoffbunker vor Luke vor Wirkmittel vor Sensor bevorzugt wird); und/oder Bestimmen zumindest eines Bereichs des Zielobjekts, der sich unter einer früheren Wirkmittelwirkung nicht unempfindlich erwiesen hat, (beispielsweise aus einer Aufzeichnung einer früheren Wiedergabe des Zielobjekts). Dieser Schritt ermöglicht es, das Zielobjekt effizient zu bekämpfen.

Es kann sein, dass die Datenbank lokal in einem Speicher der eigenen Plattform hinterlegt ist, und dass das Verfahren enthält: Senden eines vollständigen und/oder inkrementellen Abbilds der Datenbank an einen entfernten Speicher. Somit können durch die eigene Plattform und/oder durch einen Benutzer der eigenen Plattform gewonnene und in die Datenbank hinzugefügte Informationen befreundeten Kräften zugänglich gemacht werden mit der Folge, dass eine zukünftige Erkennung eines Zielobjekts / eines Zielpunkts auf einem Zielobjekt auch bei einer befreundeten Plattform schneller abläuft.

Es kann sein, dass das Verfahren enthält: Aktualisieren der Datenbank über eine Kommunikationseinrichtung aus einem entfernten Datenspeicher. Somit kann die Datenbank Erkenntnisse befreundeter Kräfte aufnehmen, um eine Erkennung eines Zielpunkts auf dem Zielobjekt zu beschleunigen.

Es kann sein, dass das Verfahren vor Schritt c) enthält: Anpassen einer Sensoreinstellung und/oder Auswählen eines Sensors oder eines Sensorbetriebsmodus in Abhängigkeit eines erkannten Typs des Zielobjekts. Auf diesen Schritt folgt vorzugsweise ein erneutes Bereitstellen eines Sensorsignals, welches das Zielobjekt wiedergibt. Somit kann eine Datenbasis zum Erstellen des digitalen Zwillings und letztlich des Zielpunkts verbessert werden. Man kann sagen, dass das System seine Sensoren und Detektionsmethoden anpasst, um detailliertere Daten des realen Zielobjekts zu erhalten.

Man kann sagen, dass in einer Datenerfassung mittels Sensorsignalen Daten betreffend das Zielobjektgesammelt werden. Diese Daten können beispielsweise Informationen über eine Größe, eine Form, eine Farbe und/oder allgemein ein physisches Merkmal des Zielobjekts, wie beispielsweis eine gefahrene Geschwindigkeit des Zielobjekts, sein. Diese Sensorsignal-basierten Daten können beispielsweise mit früher gesammelten bzw. hinterlegten Daten in der Datenbank verglichen werden.

Weiterhin wird ein Computerprogrammprodukt vorgeschlagen, welches Befehle umfasst, die bei der Ausführung des Programms durch einen Computer diesen veranlassen, das vorstehend beschriebene Verfahren zum Bestimmen eines Zielpunkts auf dem Zielobjekt auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß noch einem Aspekt der Erfindung wird eine Vorrichtung zum Erzeugen eines Zielpunkts auf einem Zielobjekt vorgeschlagen, die dazu eingerichtet ist, das vorstehend beschriebene Verfahren zum Bestimmen eines Zielpunkts auf dem Zielobjekt auszuführen. Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt schematisch eine Gefechtssituation zum Illustrieren des Einsatzes der vorgeschlagenen Vorrichtung zum Erzeugen eines Zielpunkts auf einem Zielobjekt durch Ausführen des vorgeschlagenen Verfahrens zum Erzeugen eines Zielpunkts auf einem Zielobjekt gemäß einer Ausführungsform der Erfindung; und
- Fig. 2: zeigt schematisch ein Ablaufdiagramm des vorgeschlagenen Verfahrens zum Erzeugen eines Zielpunkts auf einem Zielobjekt gemäß der Ausführungsform.

In den Figuren sind gleiche oder funktionsgleiche Elemente mit denselben Bezugszeichen versehen worden, sofern nichts anderes angegeben ist.

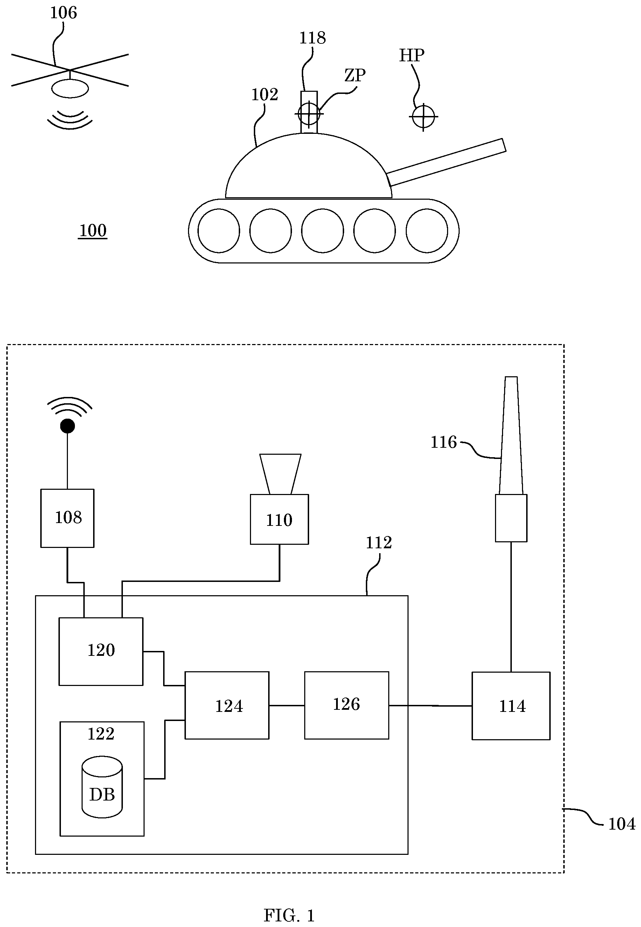

In der Fig. 1 ist eine Gefechtssituation dargestellt. In einer Umgebung 100 sind ein Zielobjekt 102, eine eigene Plattform 104 und eine Drohne 106 dargestellt.

Die eigene Plattform 104 ist beispielsweise ein Schützenpanzer. Die eigene Plattform 104 hat beispielsweise eine Kommunikationseinrichtung 108, einen Sensor 110, eine Vorrichtung 112, eine Wirkmittelleiteinrichtung (Feuerleiteinrichtung) 114 und ein Wirkmittel (Waffe) 116.

Das Zielobjekt 102 ist beispielsweis ein Kampfpanzer, der ein Kampfführungssystem 118 auf einem Turm trägt. Das Kampfführungssystem ist beispielsweise ein Sensor, und es ist schwächer gepanzert als ein Turm und eine Wanne des Kampfpanzers, sodass dieses Kampfführungssystem ein bevorzugtes Ziel an dem Zielobjekt 102 darstellt.

Die Drohne 106 ist in dieser beispielhaften Situation ein - bezogen auf die eigene Plattform 104 - externer Sensor. Es kann jedoch andere Ausführungsformen/Situationen geben, in denen die eigene Plattform 104 eine Drohne ist.

Die Kommunikationseinrichtung 108 ist zum Empfangen von Sensordaten von der Drohne 106 eingerichtet. Demgegenüber kann man den Sensor 110 als einen eigenen Sensor bezeichnen.

Die Vorrichtung 112 ist eine Vorrichtung zum Erzeugen eines Zielpunkts ZP auf einem Zielobjekt, beispielsweise dem Zielobjekt 102. Die Vorrichtung 112 hat beispielsweise einen Dateneingang 120 (Schnittstelle), einen Speicher 122, eine Verarbeitungseinheit 124 und einen Zielpunktausgang 126.

Der Dateneingang 120 ist zum Einlesen von Eingangsdaten eingerichtet. Der Dateneingang 120 ist mit der Kommunikationseinrichtung 108 und dem Sensor 110 verbunden ist.

Der Speicher 122 enthält beispielsweise eine Datenbank DB.

Die Verarbeitungseinheit 124 ist beispielsweise zum Ausführen eines Verfahrens M zum Erzeugen des Zielpunkts ZP auf dem Zielobjekt 102 eingerichtet.

Der Zielpunktausgang 126 ist zum Ausgeben des erzeugten Zielpunkts ZP an einen Bildschirm oder vorzugsweise an die Wirkmittelleiteinrichtung 114 eingerichtet.

Die Wirkmittelleiteinrichtung 114 ist zum Erzeugen eines Haltepunkts HP in Abhängigkeit des Zielpunkts ZP eingerichtet. Die Wirkmittelleiteinrichtung 114 ist zum Leiten einer Wirkung des Wirkmittels 116 (bspw. eines Feuers der Waffe) eingerichtet und mit dieser verbunden.

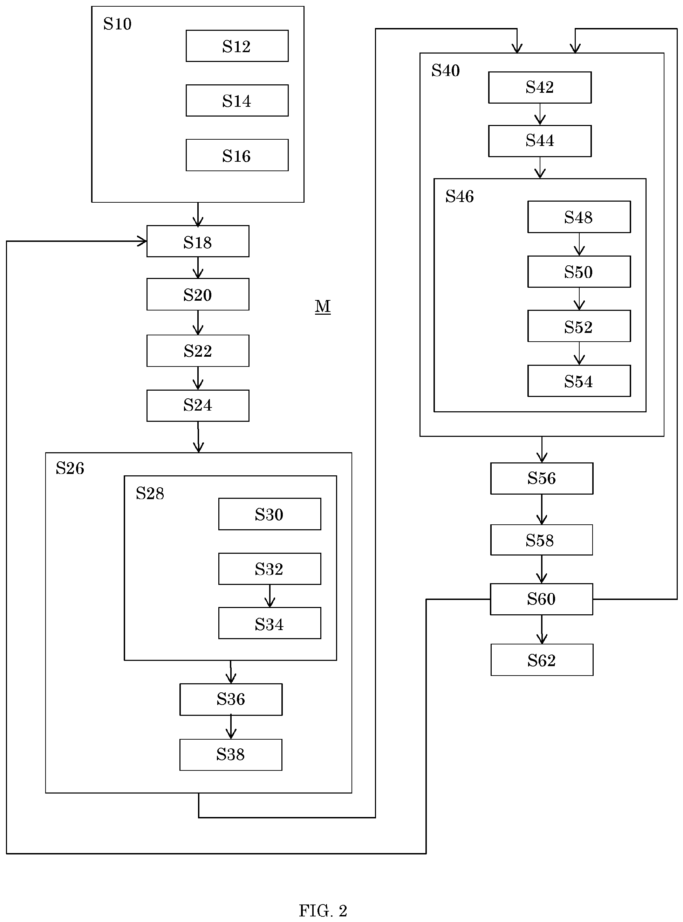

Nachfolgend wird anhand des Ablaufdiagramms der Fig. 2 das Verfahren M zum Erzeugen des Zielpunkts ZP auf dem Zielobjekt 102 beschrieben.

In einem Schritt S10 wird die Datenbank DB bereitgestellt. Beispielsweise wird die Datenbank aus dem Speicher 122 in einen Arbeitsspeicher der Verarbeitungseinheit 124 geladen.

Es kann sein, dass in einem Teilschritt S12 eine Datenbank bereitgestellt wird, welche mehreren Typen von Zielobjekten jeweils einen oder mehrere Zielpunkte zuordnet. Es kann zusätzlich oder alternativ vorgesehen sein, dass in einem Teilschritt S14 eine Datenbank bereitgestellt wird, welche mehreren Typen von Zielobjekten jeweils einen oder mehrere wirkungsspezifische Parameter zuordnet. Es kann zusätzlich oder alternativ vorgesehen sein, dass in einem Teilschritt S16 eine Datenbank bereitgestellt wird, die unterschiedliche generische digitale Zwillinge enthält. Es kann sein, dass jeder der unterschiedlichen generischen digitalen Zwillinge mit zumindest einer Objektsignatur verknüpft ist. Dieser Schritt ist eine Möglichkeit für ein Bereitstellen unterschiedlicher generischer digitaler Zwillinge. Die vorgenannten Alternativen werden nachfolgend gemeinsam beschrieben, können aber einzeln oder kumuliert vorgesehen sein.

In einem Schritt S18 wird ein Sensorsignal von der Drohne 106 empfangen, welches eine Wiedergabe des Zielobjekts 102 enthält, und über den Dateneingang 120 bereitgestellt. Zusätzlich oder alternativ wird von dem Sensor 110 ein Sensorsignal, welches ebenfalls eine Wiedergabe des Zielobjekts 102 enthält, über den Dateneingang 120 bereitgestellt.

In einem Schritt S20 wird einer Ausrichtung (Pose) des Zielobjekts 102 auf Grundlage der Wiedergabe des Zielobjekts 102 erkannt.

In einem Schritt S22 wird ein Typ des Zielobjekts 102 in Abhängigkeit der Wiedergabe des Zielobjekts 102 bestimmt. Beispielsweise wird/werden zumindest eines der Sensorsignale und/oder ein Teil davon mit den in der Datenbank DB hinterlegten Signaturen verglichen. Man kann die Objektsignatur als eine typische Wiedergabe eines für einen Objekttyp charakteristischen Merkmals beschreiben.

In einem Schritt S24 wird/werden ein oder mehrere wirkungsspezifische Parameter in Abhängigkeit des bestimmten Typs des Zielobjekts 102 aus der Datenbank DB ausgelesen. Der oder die wirkungsspezifische/-n Parameter ist/sind insbesondere verwundungsspezifische Parameter.

In einem Schritt S26 wird ein digitaler Zwilling des Zielobjekts 102 in Abhängigkeit des Sensorsignals bereitgestellt.

In einem Teilschritt S28 wird beispielsweise ein bereitgestellter generischer digitaler Zwilling auf Grundlage des zumindest einen Sensorsignals ausgewählt.

In einem Teilschritt S30 wird beispielsweise ein bereitgestellter generischer digitaler Zwilling ausgewählt, falls dessen Objektsignatur mit zumindest einem Teil des Sensorsignals übereinstimmt.

In einem Teilschritt S32 wird beispielsweise ein trainiertes Modell bereitgestellt, welches vorzugsweise ein neuronales Netz und insbesondere ein faltendes neuronales Netz ist/enthält.

In einem Teilschritt S34 wird beispielsweise einer der bereitgestellten generischen digitalen Zwillinge durch das trainierte Modell auf eine Eingabe zumindest eines Teils des Sensorsignals in das trainierte Modell hin ausgewählt.

In einem Teilschritt S36 wird beispielsweise der generische digitale Zwilling in Abhängigkeit des Sensorsignals angepasst.

In einem Schritt S38 wird beispielsweise der digitale Zwilling auf Grundlage der in Schritt S20 erkannten Ausrichtung des Zielobjekts 102 angepasst.

In einem Schritt S40 wird ein Zielpunkt ZP für das Wirkmittel 116 in Abhängigkeit des digitalen Zwillings bereitgestellt.

In einem Teilschritt S42 wird beispielsweise der Zielpunkts in Abhängigkeit des bestimmten Typs des Zielobjekts aus der Datenbank DB ausgelesen.

In einem Teilschritt S44 wird beispielsweise der Zielpunkt in Abhängigkeit der ausgelesenen ein oder mehrere wirkungsspezifischen (verwundungsspezifischen) Parameter erzeugt.

In einem Teilschritt S46 wird beispielsweise der Zielpunkt erkannt.

In einem Teilschritt S48 wird beispielsweise zumindest ein Bereich des Zielobjekts 102 bestimmt, der mit schwächer gepanzert ist als zumindest ein anderer Bereich des Zielobjekts 102. Beispielsweise ist das Kampfführungssystem 118 schwächer als die Wanne des Zielobjekts 102 gepanzert.

In einem Teilschritt S50 wird beispielsweise zumindest ein Bereich des Zielobjekts 102 bestimmt, der sicherer treffbar ist als zumindest ein anderer Bereich des Zielobjekts 102.

In einem Teilschritt S52 wird beispielsweise zumindest ein Bereich des Zielobjekts 102 bestimmt, bei dem ein Treffer mit höherer Sicherheit mit einem Ausfall des Zielobjekts 102 assoziiert ist als zumindest bei einem anderen Bereich des Zielobjekts 102. Die Assoziierung wird beispielsweise mittels eines trainierten Modells oder eines Kriterienkatalogs vorgegeben.

In einem Teilschritt S54 wird beispielsweise zumindest ein Bereich des Zielobjekts 102 bestimmt, der sich unter einer früheren Wirkmittelwirkung nicht unempfindlich erwiesen hat.

In einem Schritt S56 wird mit Wirkmittel 116gewirkt (bspw. mit der Waffe geschossen). Beispielsweise wird dazu der Zielpunkt ZP an die Wirkmittelleiteinrichtung 114 ausgegeben, sodass diese die Wirkmittelwirkung ausführt. Man kann also sagen, dass der Verfahrensschritt S56 des Verfahrens M ein Ausgeben des Zielpunkts ZP mittels der Zielpunktausgabe 126 und/oder an die Wirkmittelleiteinrichtung 114 ist. Man kann auch sagen, dass der Verfahrensschritt S56 des Verfahrens M ein Ausgeben einer Anweisung zum Wirken auf den Zielpunkt ZP (einschließlich Ausgebens des Zielpunkts ZP) mittels der Zielpunktausgabe 126 und/oder an die Wirkmittelleiteinrichtung 114 ist.

In einem Schritt S58 wird ein Resultat bzw. Ergebnis der Wirkmittelwirkung in Schritt S56 bzw. nach Schritt S56 bewertet. Dies beinhaltet beispielsweise die Bestimmung, dass das Zielobjekt 102 noch nicht zerstört / kampfunfähig ist.

In einem Schritt S60 wird in Abhängigkeit der Bewertung der Wirkung des Wirkmittels entschieden, ob der Zielpunkt ZP beibehalten oder gewechselt wird. Dann wird zumindest der Schritt S40 "Bereitstellen eines Zielpunkts für ein Wirkmittel in Abhängigkeit des digitalen Zwillings" wiederholt. Vorzugsweise wird das Verfahren ab Schritt S18 wiederholt.

In einem Schritt S62 wird/werden die Wiedergabe des Zielobjekts und/oder die Bewertung des Resultats der Wirkung des Wirkmittels und/oder des angepassten digitalen Zwillings zu der Zieldatenbank hinzugefügt.

Man kann sagen, dass das vorgeschlagene Verfahren M und die vorgeschlagene Vorrichtung 112 sich auf ein fortschrittliches militärisches System zur Analyse und Verarbeitung von Daten gegnerischer Fahrzeuge (Zielobjekte) bezieht.

Obwohl die vorliegende Erfindung anhand von Ausführungsbeispielen beschrieben wurde, ist sie vielfältig modifizierbar.

### BEZUGSZEICHENLISTE

- 100: Umgebung
- 102: Zielobjekt
- 104: eigene Plattform
- 106: Drohne
- 108: Kommunikationseinrichtung
- 110: Sensor
- 112: Vorrichtung zum Erzeugen eines Zielpunkts auf einem Zielobjekt
- 114: Wirkmittelleiteinrichtung bzw. Wirkmittelleitsystem
- 116: Wirkmittel
- 118: Kampfführungssystem
- 120: Dateneingang
- 122: Speicher
- 124: Verarbeitungseinheit
- 126: Zielpunktausgang
- DB: Datenbank
- HP: Haltepunkt
- ZP: Zielpunkt
- M: Verfahren zum Erzeugen eines Zielpunkts auf einem Zielobjekt
- S10: Bereitstellen einer Datenbank
- S12: Bereitstellen einer Datenbank, welche mehreren Typen von Zielobjekten jeweils einen oder mehrere Zielpunkte zuordnet
- S14: Bereitstellen einer Datenbank, welche mehreren Typen von Zielobjekten jeweils einen oder mehrere wirkungsspezifische Parameter zuordnet
- S16: Bereitstellen einer Datenbank, die unterschiedlicher generischer digitaler Zwillinge enthält, wobei vorzugsweise jeder der unterschiedlichen generischen digitalen Zwillinge mit zumindest einer Objektsignatur verknüpft ist
- S18: Bereitstellen eines Sensorsignals, welches eine Wiedergabe des Zielobjekts enthält
- S20: Erkennen einer Ausrichtung bzw. Pose des Zielobjekts auf Grundlage der Wiedergabe des Zielobjekts
- S22: Bestimmen eines Typs des Zielobjekts in Abhängigkeit der Wiedergabe des Zielobjekts
- S24: Auslesen eines oder mehrerer wirkungsspezifischer Parameter in Abhängigkeit des bestimmten Typs des Zielobjekts aus der Datenbank
- S26: Bereitstellen eines digitalen Zwillings des Zielobjekts in Abhängigkeit des Sensorsignals
- S28: Auswählens eines bereitgestellten generischen digitalen Zwillings auf Grundlage des zumindest einen Sensorsignals
- S30: Auswählens eines bereitgestellten generischen digitalen Zwillings, falls dessen Objektsignatur mit zumindest einem Teil des Sensorsignals übereinstimmt
- S32: Bereitstellen eines trainierten Modells, welches vorzugsweise ein neuronales Netz und insbesondere ein faltendes neuronales Netz ist/enthält
- S34: Auswählens eines bereitgestellten generischen digitalen Zwillings durch das trainierte Modell auf eine Eingabe zumindest eines Teils des Sensorsignals in das trainierte Modell hin
- S36: Anpassen des generischen digitaler Zwillings in Abhängigkeit des Sensorsignals
- S38: Anpassen des digitalen Zwillings auf Grundlage der Ausrichtung des Zielobjekts
- S40: Bereitstellen eines Zielpunkts für ein Wirkmittel in Abhängigkeit des digitalen Zwillings
- S42: Auslesen des Zielpunkts in Abhängigkeit des bestimmten Typs des Zielobjekts aus der Datenbank
- S44: Erzeugen des Zielpunkts in Abhängigkeit der ausgelesenen ein oder mehrere wirkungsspezifischer Parameter
- S46: Erkennen des Zielpunkts
- S48: Bestimmen zumindest eines Bereichs des Zielobjekts, der mit schwächer gepanzert ist als zumindest ein anderer Bereich des Zielobjekts;
- S50: Bestimmen zumindest eines Bereichs des Zielobjekts, der sicherer treffbar ist als zumindest ein anderer Bereich des Zielobjekts;
- S52: Bestimmen zumindest eines Bereichs des Zielobjekts, bei dem ein Treffer mit höherer Sicherheit mit einem Ausfall des Zielobjekts assoziiert ist als zumindest bei einem anderen Bereich des Zielobjekts;
- S54: Bestimmen zumindest eines Bereichs des Zielobjekts, der sich unter einer früheren Wirkung eines Wirkmittels nicht unempfindlich erwiesen hat.
- S56: Auslösen der Wirkung des Wirkmittels auf den Zielpunkt
- S58: Bewerten der Wirkung des Wirkmittels
- S60: Wiederholen zumindest des Schritts "Bereitstellen eines Zielpunkts für ein Wirkmittel in Abhängigkeit des digitalen Zwillings", wobei der Zielpunkt in Abhängigkeit der Bewertung der Wirkung des Wirkmittels beibehalten oder gewechselt wird
- S62: Hinzufügen der Wiedergabe des Zielobjekts und/oder der Bewertung der Wirkung des Wirkmittels und/oder des angepassten digitalen Zwillings zu der Zieldatenbank

## Patentansprüche

1. Verfahren (M) zum Erzeugen eines Zielpunkts (ZP) auf einem Zielobjekt (102), mit den Schritten:
a) Bereitstellen (S18) eines Sensorsignals, welches eine Wiedergabe des Zielobjekts (102) enthält;
b) Bereitstellen (S26) eines digitalen Zwillings des Zielobjekts (102) in Abhängigkeit des Sensorsignals; und
c) Bereitstellen (S40) eines Zielpunkts (ZP) für ein Wirkmittel (116) in Abhängigkeit des digitalen Zwillings.

2. Verfahren nach Anspruch 1, mit den Schritten:
d) Wirken (S56) des Wirkmittels (116) auf den Zielpunkt (ZP);
e) Bewerten (S58) der Wirkung des Wirkmittels; und
f) Wiederholen (S60, S40) zumindest des Schritts c), wobei der Zielpunkt (ZP) in Abhängigkeit der Bewertung in Schritt e) beibehalten oder gewechselt wird.

3. Verfahren nach einem der vorhergehenden Ansprüche, wobei:
vor Schritt b) eine Datenbank (DB) bereitgestellt (S10, S12) wird, welche mehreren Typen von Zielobjekten (102) jeweils einen oder mehrere Zielpunkte (ZP) zuordnet;
vor Schritt c) der Typ Zielobjekt in Abhängigkeit der Wiedergabe des Zielobjekts (102) bestimmt (S22) wird;
in Schritt c) der Zielpunkt (ZP) in Abhängigkeit des bestimmten Typs des Zielobjekts (102) aus der Datenbank (DB) ausgelesen (S42) wird.

4. Verfahren nach einem der vorhergehenden Ansprüche, wobei:
vor Schritt b) eine Datenbank (DB) bereitgestellt (S10, S14) wird, welche mehreren Typen von Zielobjekten jeweils einen oder mehrere wirkungsspezifische Parameter zuordnet;
vor Schritt c) der Typ Zielobjekt in Abhängigkeit der Wiedergabe des Zielobjekts (102) bestimmt (S22) wird;
vor Schritt c) ein oder mehrere wirkungsspezifische Parameter in Abhängigkeit des bestimmten Typs des Zielobjekts (102) aus der Datenbank (DB) ausgelesen (S24) werden; und
in Schritt c) der Zielpunkt (ZP) in Abhängigkeit des ausgelesenen wirkungsspezifischen Parameters oder der mehreren ausgelesenen wirkungsspezifischen Parameter erzeugt (S44) wird.

5. Verfahren nach einem der vorhergehenden Ansprüche, wobei:
vor Schritt b) ein generischer digitaler Zwilling des Zielobjekts bereitgestellt (S16) wird; und
in Schritt b) der generische digitale Zwilling in Abhängigkeit des Sensorsignals angepasst (S36) wird.

6. Verfahren nach Anspruch 5, wobei das Bereitstellen eines generischen digitalen Zwillings des Zielobjekts enthält:
Bereitstellen (S16) unterschiedlicher generischer digitaler Zwillinge; und
Auswählens (S28) eines bereitgestellten generischen digitalen Zwillings auf Grundlage des zumindest einen Sensorsignals.

7. Verfahren nach Anspruch 6,
wobei jeder der unterschiedlichen generischen digitalen Zwillinge mit zumindest einer Objektsignatur verknüpft ist, und
wobei ein generischer digitaler Zwilling ausgewählt (S30) wird, falls dessen Objektsignatur mit zumindest einem Teil des Sensorsignals übereinstimmt.

8. Verfahren nach einem der Ansprüche 6 oder 7, enthaltend:
Bereitstellen (S32) eines trainierten Modells, welches vorzugsweise ein neuronales Netz und insbesondere ein faltendes neuronales Netz (convolutional neural network) ist/enthält;
wobei der generische digitale Zwilling durch das trainierte Modell auf eine Eingabe zumindest eines Teils des Sensorsignals in das trainierte Modell hin ausgewählt (S34) und/oder ausgegeben wird.

9. Verfahren nach einem der Ansprüche 3 bis 8, enthaltend: Hinzufügen (S62) der Wiedergabe des Zielobjekts (102) und/oder der Bewertung der Wirkung des Wirkmittels und/oder des angepassten digitalen Zwillings zu der Zieldatenbank (DB).

10. Verfahren nach einem der vorhergehenden Ansprüche, wobei
vor Schritt b) eine Ausrichtung des Zielobjekts (102) auf Grundlage der Wiedergabe des Zielobjekts (102) erkannt (S20) wird; und
in Schritt b) der digitale Zwilling auf Grundlage der Ausrichtung des Zielobjekts (102) bereitgestellt (S38) wird.

11. Verfahren nach einem der vorhergehenden Ansprüche, wobei der in Schritt b) bereitgestellte digitale Zwilling das Zielobjekt (102) auf Grundlage von Informationen zu dem Zielobjekt (102) individuell beschreibt, die in dem zumindest einen Sensorsignal enthalten sind.

12. Verfahren nach einem der vorhergehenden Ansprüche, wobei der digitale Zwilling das Zielobjekt (102) dreidimensional beschreibt.

13. Verfahren nach einem der vorhergehenden Ansprüche, wobei der Zielpunkt (ZP) auf Grundlage zumindest eines der folgenden Schritte erkannt (S46) wird:
Bestimmen (S48) zumindest eines Bereichs des Zielobjekts (102), der mit schwächer gepanzert ist als zumindest ein anderer Bereich des Zielobjekts (102);
Bestimmen (S50) zumindest eines Bereichs des Zielobjekts (102), der sicherer treffbar ist als zumindest ein anderer Bereich des Zielobjekts (102);
Bestimmen (S52) zumindest eines Bereichs des Zielobjekts (102), bei dem ein Treffer mit höherer Sicherheit mit einem Ausfall des Zielobjekts (102) assoziiert ist als zumindest bei einem anderen Bereich des Zielobjekts (102); und/oder
Bestimmen (S54) zumindest eines Bereichs des Zielobjekts (102), der sich unter einer früheren Wirkung des Wirkmittels (116) nicht unempfindlich erwiesen hat.

14. Computerprogrammprodukt, welches Befehle umfasst, die bei einer Ausführung des Programms durch eine Computereinrichtung diese veranlassen, das Verfahren (M) gemäß einem der vorhergehenden Ansprüche auszuführen.

15. Vorrichtung (112) zum Erzeugen eines Zielpunkts (ZP) auf einem Zielobjekt (102), die dazu eingerichtet ist, das Verfahren (M) nach einem der Ansprüche 1 - 13 auszuführen.
